# EUROPEAN PATENT APPLICATION

(11) **EP 0 960 686 A2**
(43) Date of publication of application: **01.12.1999**
(21) Application number: 99830280.6
(22) Date of filing: 10.05.1999
(51) Int. Cl.: B23Q 3/00

(54) **A woodworking machine**

(30) Priority: 19.05.1998 IT BO980325
(71) Applicant: SCM GROUP S.p.A., 47900 Rimini (IT)
(72) Inventor: Pucci, Aureliano, 47900 Rimini (IT)
(74) Representative: Lanzoni, Luciano

(57) **Abstract**

A woodworking machine, such as a spindle moulder, comprises at least one workpiece (1) fence unit and/or additional tool unit (7, 8) pivoted outside the working area of the worktable (3) so that it can be turned about the pivot axis between two limit positions, namely, a working position in which the unit (7, 8) is positioned along a feed line (L) of the workpiece (1) and an idle or home position in which the unit (7, 8) is turned about the pivot axis in such a way as to be positioned outside the feed line (L), that is, outside the working area of the worktable (3).

## Description

The present invention relates to a machine for working wood or similar materials.

The machine forming the subject-matter of the present patent application is a vertical router with bottom-mounted cutter, usually known as "spindle moulder" to experts in the trade. Machines of this kind are used for diverse woodworking operations (such as rebating and tenoning for door and window frame parts) with a medium productivity rate.

This type of machine consists basically of a horizontal worktable which supports the workpiece and a vertical spindle located on one side of the horizontal worktable, both mounted on a base.

The spindle is power-driven and is used to mount and drive one or more cutting tools designed to machine the workpiece. On both sides of the spindle, there are fences which can be adjusted relative to the tool, are perpendicular to the worktable and are designed to define the distance at which the workpiece is stopped from the tool (that is, the cutting depth) and to guide the workpiece towards the tool. Usually, in simple spindle moulders, the workpiece is fed manually by an operator.

When conventional spindle moulders of the kind just described were no longer sufficient to meet the requirements of woodworkers, it became common practice to provide the basic machine with several different attachments or "accessories" suitable for machining operations required by users of this type of machine: for example, power-driven carriages for feeding a workpiece to be tenoned, end trimming units, squaring and profiling units, and glazing bead units were added to the basic machine to perform different operations.

Adding accessories in this way extended the range of operations that could be done with the spindle moulder, thus increasing its value, but decreased its productivity because removing and fitting tools to change from one operation to another were very lengthy and time-consuming jobs precisely because each accessory was not a part of the machine but a separate attachment.

This led to a reversal in market trends, with demand moving away from spindle moulders equipped with different accessories and more and more towards diverse types of specialized spindle moulders, each designed to perform a different operation, according to the type of cutting tool fitted. This meant that manufacturers began producing spindle moulders in an ever increasing range of models to meet diverse user requirements, but this has resulted in higher production and warehousing costs. Moreover, this diversification has gradually led to the production of machines whose functions are further and further removed from the purpose for which spindle moulders were originally designed and which are not capable (unless stripped of all their accessories) of performing basic machining operations such as the "manual" moulding of curved workpieces, this operation requiring "only" a cutting tool that protrudes from the worktable.

In an attempt to overcome this situation, the Applicant has designed and produced a spindle moulder structured in such a way as to have several working configurations to perform different operations on wooden workpieces and requiring extremely short tool setup times.

The technical characteristics of the invention, in accordance with the above mentioned aims, are clearly described in the claims herein and the advantages are apparent from the detailed description which follows, with reference to the accompanying drawings, which illustrate a preferred embodiment of the invention, without restricting its scope, and in which:
- Figure 1 is a schematic top plan view of a woodworking machine made in accordance with the present invention;
- Figure 2 is a perspective view of the machine illustrated in Figure 1, showing some of the components in the idle position;
- Figure 3 is a perspective view of the machine illustrated in Figure 1, with some parts cut away in order to better illustrate others and showing some of the components in the idle position;
- Figure 4 shows a detail of the machine illustrated in Figures 1 to 3 viewed from the direction of B in Figure 1.

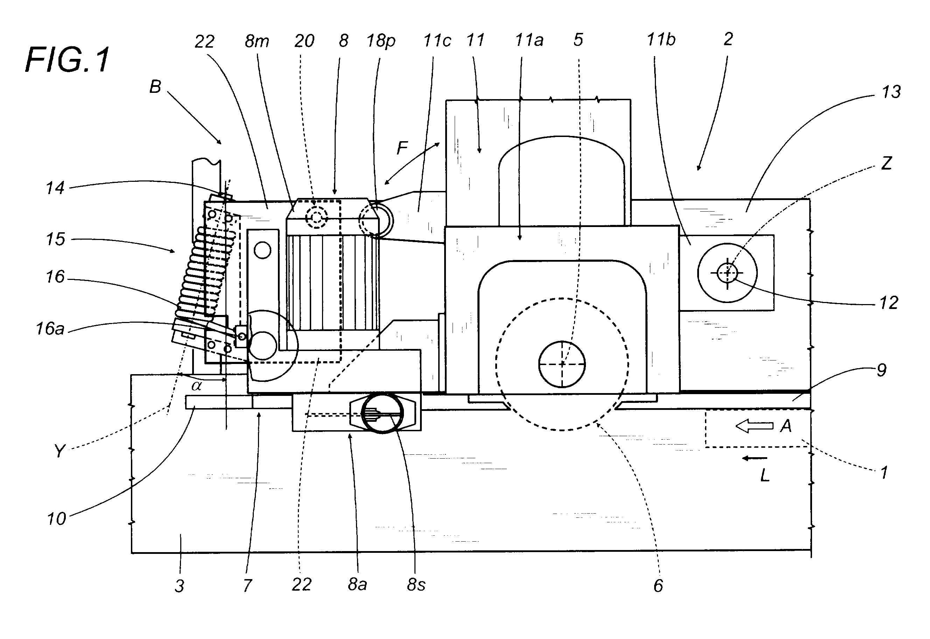

With reference to the accompanying drawings, and in particular Figure 1, the woodworking machine disclosed herein is a vertical router with bottom-mounted cutter, usually known as "spindle moulder" to experts in the trade.

The machine, labelled 2 as a whole in the drawings, consists, in its standard configuration, of a horizontal worktable 3 which supports the workpiece 1 and a vertical spindle 5 located on one side of the horizontal worktable 3 and housed partly in an auxiliary table 13 which forms a single block with the worktable 3, all these parts being mounted on a base 4. The spindle 5 has one or more cutting tools 6 (shown as dashed lines in Figure 1) for performing operations such as, for example, profiling and tenoning, on the workpiece 1.

One or more units, such as a fence unit to guide the workpiece 1 along the worktable 3 and/or an additional tool unit to machine the workpiece, can be added to this standard configuration.

In the preferred embodiment described here and illustrated in the accompanying drawings, there are two such units, a pair of fences 7 and a tool unit 8, but this configuration does not restrict the scope of the invention. In other terms, the fences 7 may be fitted independently of the tool unit 8.

Below, the units 7 and 8 will be mentioned together but their structures will be considered individually.

Basically, the two units 7 and 8 are pivoted independently of each other outside the working area of the worktable 3 so that they can be turned about the pivot axis between two limit positions, namely, a working position in which the units 7, 8 are positioned along a feed line L of the workpiece 1 and an idle or home position in which the units 7, 8 is turned about the pivot axis in such a way as to be positioned outside the feed line L, that is, outside the working area of the worktable 3.

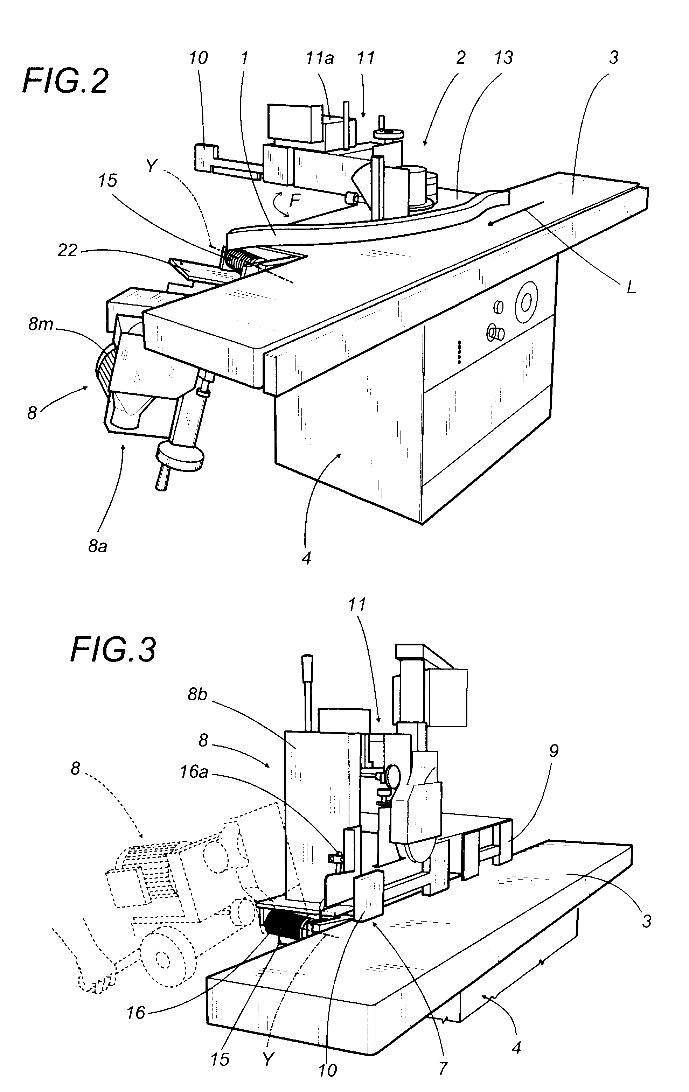

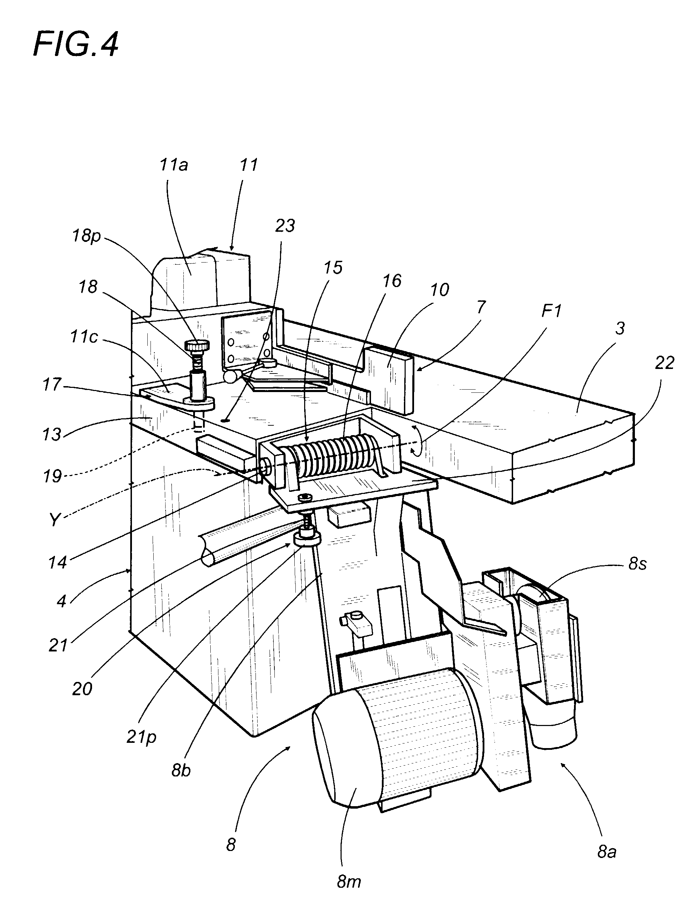

As shown in Figures 2 and 4, the unit 7 consists of a pair of fences 9 and 10 for the workpiece 1 which, when they are in the working position (illustrated in Figures 1, 3, and 4), are positioned on each side of the cutter spindle 5 and are used to move the workpiece 1 closer to the cutter spindle 5 and to adjust the workpiece cutting depth (through known systems which are not illustrated).

These two fences 9 and 10 are fitted to a single mounting structure 11. The mounting structure 11 is of known type and consists of a central body 11a to which both the fences 9 and 10 are connected and which forms a cover for the spindle 5. The structure 11 also has an arm 11b pivoted at Z to a first pin 12 on which it rotates about a vertical axis located outside the worktable 3 so as to enable the pair of fences 9 and 10 to be moved away from the cutter spindle 5 and from the worktable 3 (see arrow F in Figures 1 and 2).

The arm 11b, pivoted to the first pin 12, is located at the end of one of the fences 9 and 10 that is further away from the cutter spindle 5 relative to the feed line L and over the auxiliary table 13. As shown in Figure 1, the pivot point Z is located close to the fence 9 located upstream of the cutter spindle 5 relative to a feed direction A of the wooden workpiece 1 (in the drawings, the feed line L and the feed direction A are indicated by arrows pointing in the same direction).

To stabilize the fences 9 and 10 in the working position, there are first securing means 17 acting between the fences and the auxiliary table 13.

Looking in more detail (see Figure 4), the first securing means 17 consist of a first, vertical threaded rod 18, which is located close to one of the fences, in this case the fence 10, opposite the pivot point Z, and which can be screwed into a first hole 19 (illustrated by a dashed line) made in the auxiliary table 13 when the fences 9 and 10 are in the working position.

The first rod 18 is supported by a second arm 11c of the central body 11a and is equipped with a handwheel 18p which can be used to screw it in and out of the first hole 19.

The second unit 8, of the two mentioned above, is used to machine the workpiece 1 and is located downstream of the cutter spindle 5, relative to the feed direction A of the workpiece 1.

In the preferred embodiment being described, the unit 8 is a unit used to cut a glazing bead from the workpieces 1 as they leave the cutter spindle area and, in the above mentioned working position, is located beside the cutter spindle 5 and downstream of the spindle. The unit 8, of the known type, has a working portion 8a equipped with a cutting tool 8s and a drive portion 8m located behind the tool 8s, and is fitted to a mounting frame 8b. Even if it cannot be fully seen in the drawings, the tool 8s is designed to cut a strip from the workpiece 1, forming the frame upright, feeding out from the cutter spindle 5. This strip will be used as a glazing bead when the frame is later assembled.

At the end of it that is further away from the spindle 5, the tool unit 8 (see Figures 1 to 4) is rotatably mounted at Y, on a baseplate 22, to a second, horizontal pin 14, located in the same plane as the worktable 3 and outside the worktable. Thus, the unit 8 can be rotated (see arrows F1) from the working position (see Figure 3) to the above mentioned idle position (see Figures 1, 2 and 4) in which the unit 8 is outside and under the worktable 3, and vice versa.

As can be clearly seen in Figures 1 and 4, the second pivot 14 pin makes with the feed line L an angle α (preferably acute) that is large enough to enable the tool unit 8 to reach the idle position where it is outside the working area of the worktable 3 but without increasing the width of the machine 2.

As can also be seen in the drawings, the second pivot pin 14 is equipped with a servo device 15 designed to make it easier to manually rotate the tool unit 8 from the idle position to the working position and vice versa.

In the simple embodiment illustrated, the servo device 15 consists of a torsion spring 16 fitted axially over the second pin 14 and attached at one end 16a (see Figure 3) to the tool unit 8 in such a way as to balance the tool unit 8 when the latter moves from the working position to the idle position and vice versa.

Like the fences 9 and 10, the unit 8 is equipped with second securing means 20 which act between the unit and the auxiliary table 13 to stabilize the unit 8 in the working position.

The second securing means 20 (see Figure 4 in particular) consist of a second threaded rod 21, which is housed in and passes through the base plate 22 of the tool unit 8, and which can be screwed into a second hole 23 made in the auxiliary table 13 when the tool unit is in the working position. The second rod 21 is also equipped with a handwheel 21p which can be used by a machine operator to screw the rod in and out of the hole.

With a machine structured in the way described above, the tool setup can be changed quickly and easily to obtain different working configurations:
- In a first machine configuration, the two units 7 and 8 (see Figure 2) are in the idle position and only the cutter spindle is used, for example, to mould curved wooden workpieces 1 manually, using also all the space on the auxiliary table 13, which is completely free.
- In a second configuration, the fences 9 and 10 are in the working position (see Figures 1 and 4) and the unit 8 is in the idle position so that all the normal operations, for example, profiling, which require the use of the fences 9 and 10, can be performed on the workpiece 1.
- In a third configuration, the fences 9 and 10 and the glazing bead unit 8 are both in the working position so all the operations needed to make complete frames, that is, uprights and crosspieces, including the cutting of glazing beads, can be performed on the workpieces 1.

The machine can be changed from one configuration to another extremely quickly by simply turning the two units 7 and 8 to the enabled or disabled positions according to requirements. Moreover, when the units are disabled, they do not greatly affect the overall dimensions of the machine which, thanks to the special design of the pivot points, remain within the limits of standard machines of this kind.

The invention described can be subject to modifications and variations without thereby departing from the scope of the inventive concept. Moreover, all the details of the invention may be substituted by technically equivalent elements.

## Claims

1. A woodworking machine for workpieces (1) made of wood or similar materials, the machine (2) being of the type consisting of a horizontal worktable (3), which supports the workpiece (1) and which is supported by a base (4), and a vertical spindle (5) which is located on one side of the worktable (3) and which is equipped with one or more tools used for machining the workpiece (1), the machine being characterized in that it comprises at least one workpiece (1) fence unit and/or additional tool unit (7, 8) pivoted outside the working area of the worktable (3) so that it can be turned about the pivot axis between two limit positions, namely, a working position in which the unit (7, 8) is positioned along a feed line (L) of the workpiece (1) and an idle or disabled position in which the unit (7, 8) is turned about the pivot axis in such a way as to be positioned outside the feed line (L), that is, outside the working area of the worktable (3).

2. The machine according to claim 1, characterized in that the unit (7) consists of a pair of fences (9, 10) which, when they are in the working position, are located on each side of the cutter spindle (5) and are fitted to a single mounting structure (11), the machine being characterized in that said fences (9, 10) are pivoted at (Z) to a first pin (12) on which they rotate about a vertical axis located outside the worktable (3) so as to enable the pair of fences (9 and 10) to be moved away from the cutter spindle (5) and from the worktable (3).

3. The machine according to claim 2, characterized in that the first pivot pin (12) is located at the end of one of the fences (9, 10) that is further away from the cutter spindle (5) relative to the feed line (L) and over an auxiliary table (13) connected to the worktable (3).

4. The machine according to claim 2, characterized in that the fence (9) pivoted to the first vertical pin (12) is located upstream of the cutter spindle (5) relative to a feed direction (A) of the wooden workpiece (1).

5. The machine according to claim 2, characterized in that the pair of fences (9, 10) has first securing means (17) acting between the fences (9, 10) and the auxiliary table (13) and designed to stabilize the fences in the working position.

6. The machine according to claim 5, characterized in that the first securing means (17) consist of a first, vertical threaded rod 18, which is located on one of the fences (10) and which can be screwed into a first hole (19) made in the auxiliary table (13) when the fences (9, 10) are in the working position.

7. The machine according to claim 1, where the unit (8) consists of a tool unit used to machine the wooden workpiece (1) and located downstream of the cutter spindle (5), relative to the feed direction (A) of the workpiece (1) as it moves along the feed line (L), next to the cutter spindle (5) when in the working position, the machine being characterized in that the tool unit (8) is rotatably mounted to a second, horizontal pin (14), located outside the working area of the worktable (3) so that the tool unit (8) can be rotated to the above mentioned idle position in which the tool unit (8) is outside and under the worktable (3).

8. The machine according to claim 7, characterized in that the tool unit (8) is pivoted at (Y) at the end of it that is further away from the cutter spindle (5).

9. The machine according to claim 7, characterized in that the second pin (14) is horizontal and located in the same plane as the worktable (3).

10. The machine according to claim 7, characterized in that the second pin (14) makes with the feed line (L) an angle (α) that is large enough to enable the tool unit (8) to reach the idle position where it is outside the working area of the worktable (3).

11. The machine according to claim 7, characterized in that the second pivot pin (14) is equipped with a servo device (15) designed to make it easier to manually rotate the tool unit (8) from the idle position to the working position and vice versa.

12. The machine according to claim 11, characterized in that the servo device (15) consists of a torsion spring (16) fitted axially over the second pin (14) and attached at one end (16a) to the tool unit (8) in such a way as to balance the tool unit (8) when the tool unit (8) moves from the working position to the idle position and vice versa.

13. The machine according to claim 7, characterized in that the tool unit (8) consists of a unit for making a glazing bead from the workpieces (1).

14. The machine according to claim 7, characterized in that the tool unit (8) is equipped with second securing means (20) acting between the unit and the auxiliary table (13) located beside the worktable (3), said second securing means (20) being designed to stabilize the unit (8) in the working position.

15. The machine according to claim 7, characterized in that the second securing means (20) consist of at least one second rod (21), which is housed in and passes through a base plate (22) of the tool unit (8), and which can be screwed into a second hole (23) made in the auxiliary table (13) when the tool unit (8) is in the working position.

16. The machine according to claim 1, having at least two units (7, 8), a fence unit (7) to guide the workpiece (1) and consisting of a pair of fences (9, 10) located on both sides of the cutter spindle (5) and fitted to a single mounting structure (11), and a tool unit (8) used to machine the wooden workpiece (1) and located downstream of the cutter spindle (5), relative to the feed direction (A) of the workpiece (1), next to the cutter spindle (5) when in the working position, the machine being characterized in that both the fence and tool units (7, 8) are pivoted independently of each other to a first pivot pin (12) and a second pivot pin (14) on both sides of the cutter spindle (5) so as to enable the independent rotation of the units (7, 8) between the working position along the feed line (L) and the idle position outside the worktable (3).
